Europäisches Patentamt

European Patent Office

Office européen des brevets

(19)

(11) Numéro de publication : **0 296 913 B1**

(12) # FASCICULE DE BREVET EUROPEEN

(45) Date de publication du fascicule du brevet :
06.11.91 Bulletin 91/45

(51) Int. Cl.⁵ : **B60R 22/36**

(21) Numéro de dépôt : **88401370.7**

(22) Date de dépôt : **06.06.88**

(54) Enrouleur pour ceinture de sécurité.

(30) Priorité : **12.06.87 FR 8708222**

(43) Date de publication de la demande :
**28.12.88 Bulletin 88/52**

(45) Mention de la délivrance du brevet :
**06.11.91 Bulletin 91/45**

(84) Etats contractants désignés :
**DE ES GB IT SE**

(56) Documents cités :
**EP-A- 0 067 322**
**DE-U- 8 507 211**
**US-A- 3 941 330**

(73) Titulaire : **ECIA - EQUIPEMENTS ET COMPOSANTS POUR L'INDUSTRIE AUTOMOBILE**
**F-25400 Audincourt (Doubs) (FR)**

(72) Inventeur : **Ballet, Jean Noel**
**3 rue des Carrières**
**F-70800 Aillevillers (FR)**

(74) Mandataire : **Mestre, Jean et al**
**c/o CABINET LAVOIX 2, place d'Estienne d'Orves**
**F-75441 Paris Cédex 09 (FR)**

## Description

La présente invention concerne les enrouleurs pour ceinture de sécurité et, plus particulièrement, est relative à un enrouleur pour ceinture de sécurité à tendeur à ressort et à blocage automatique sous la dépendance d'une centrale à inertie.

Comme on le sait, à l'instigation des Pouvoirs Publics, les véhicules automobiles terrestres sont équipés, en série, de ceintures de sécurité.

Pour le confort des passagers, ces ceintures de sécurité sont munies d'un enrouleur à tendeur à ressort de rappel et à blocage automatique sous la dépendance d'une centrale à inertie. De la sorte, la sangle de la ceinture, qui est habituellement tendue et appliquée contre le passager, est dotée d'une certaine faculté de mobilité si les mouvements auxquels elle est soumise ne sont pas trop brusques. Autrement, en cas de mouvements brusques s'exerçant sur la sangle, celle-ci se trouve automatiquement bloquée sous l'action d'une centrale à inertie qui est sensible et à la composante horizontale de décélération du véhicule et à la composante tangentielle d'accélération du déroulement de la sangle à l'encontre de la sollicitation du ressort de rappel du tendeur. Lorsque la sangle se trouve ainsi immobilisée, les contraintes auxquelles elle est soumise de par les efforts qu'exerce sur elle le passager, sont transmises à la structure du véhicule.

On comprend donc qu'en cas de décélération brutale du véhicule qui peut atteindre plusieurs "g", l'enrouleur de la ceinture est soumis à des contraintes particulièrement sévères auxquelles il lui faut résister sous peine de perdre toute efficacité. C'est pourquoi l'immobilisation du moyeu sur lequel la sangle de la ceinture de sécurité s'enroule se fait en deux temps. Que ce soit lors de la détection d'une composante tangentielle ou horizontale d'accélération qui dépasse une valeur prédéterminée, le moyeu est d'abord immobilisé en rotation puis ensuite définitivement bloqué à l'aide de moyens qui sont aptes à supporter des efforts considérables.

Pour obtenir un tel blocage automatique qui s'effectue comme on vient de le rappeler, le moyeu, sur lequel s'enroule et duquel se déroule la sangle de la ceinture de sécurité, est à la fois mobile en rotation suivant son axe et en translation suivant une direction perpendiculaire à son axe de rotation.

Diverses solutions ont déjà été proposées pour obtenir ces deux degrés de liberté.

Selon une technique proposée par le brevet français 2 367 508, les paliers dans lesquels se déplace le moyeu sont relativement libres et se meuvent sans guidage dans une ouverture qui présente une configuration triangulaire approximativement en "delta", pratiquée dans les parois parallèles d'une embase en U.

Selon une autre solution relatée par le brevet européen 0112033 ces paliers sont mobiles en translation dans des boutonnières ménagées dans des plaques d'extrémité rapportées qui sont montées de manière à pouvoir basculer sur les parois parallèles d'une embase en U.

Aucune de ces solutions ne donne entière satisfaction.

En effet, la première de celle-ci est telle que les paliers ne sont pas efficacement guidés puisqu'ils sont libres dans des ouvertures de dimensions supérieures aux leurs. L'axe du moyeu peut s'incliner et se mettre de travers.

La seconde de ces solutions est prohibitive car elle est compliquée et fait appel à des pièces nombreuses dont les coûts de fabrication et de montage sont importants.

Une autre solution est aussi exposée par le document US 3941330.

L'enrouleur qui y est décrit comprend des paliers dans lesquels se déplace le moyeu et qui sont reliés à deux éléments dont l'un est frangible et l'autre déformable. L'élément déformable ne permet pas à lui seul de maintenir le moyeu en position centrée. L'élément frangible fait que le fonctionnement de l'enrouleur n'est pas réversible puisque celui-ci est détruit définitivement en cas de colision violente.

Le but de l'invention est de faire un enrouleur pour ceinture de sécurité du type indiqué qui soit simple à fabriquer et à assembler et qui assure un guidage précis des paliers du moyeu.

L'invention a pour objet un enrouleur pour ceinture de sécurité à tendeur à ressort de rappel et à blocage automatique sous la dépendance d'une centrale à inertie.

L'enrouleur selon l'invention est d'un type exposé dans le préambule de la revendication principale et où figure ce qui est révélé par le document US 3941330.

Les particularités de l'invention ressortent notamment de la partie caractérisante de la revendication principale.

D'autres caractéristiques de l'invention ressortiront de la lecture de la description et des revendications qui suivent et de l'examen du dessin annexé, donné seulement à titre d'exemple, où :

— la Fig. 1 est une vue perspective éclatée schématique d'un mode de réalisation de l'enrouleur suivant l'invention ;

— la Fig. 2 est une coupe méridienne longitudinale, par l'axe du moyeu, de la Fig. 1 ;

— la Fig. 3 est une vue perspective agrandie du palier situé du côté du tendeur à ressort de rappel ;

— la Fig. 4 est une vue analogue du palier opposé situé du côté de la centrale à inertie et des commandes ;

— la Fig. 5 est une vue de détail du disque d'inertie de la centrale à inertie ; et

— les Fig. 6A et 6B sont des vues latérales schématiques simplifiées, côté centrale à inertie, représentant les positions relatives qu'occupe le moyeu par rapport à son embase lorsque la sangle est libre de s'enrouler et de se dérouler (Fig. 6A et lorsque le moyeu est bloqué automatiquement (Fig. 6B ; pour faciliter l'illustration les constituants sont supposés transparents.

Les ceintures de sécurité à enrouleur étant bien connues dans la technique, on ne décrira dans ce qui suit que ce qui a trait directement ou indirectement à l'invention. Pour le surplus, le spécialiste du secteur technique considéré puisera dans les solutions classiques à sa disposition pour résoudre les problèmes particuliers auxquels il a à faire face en fonction des situations où il est placé.

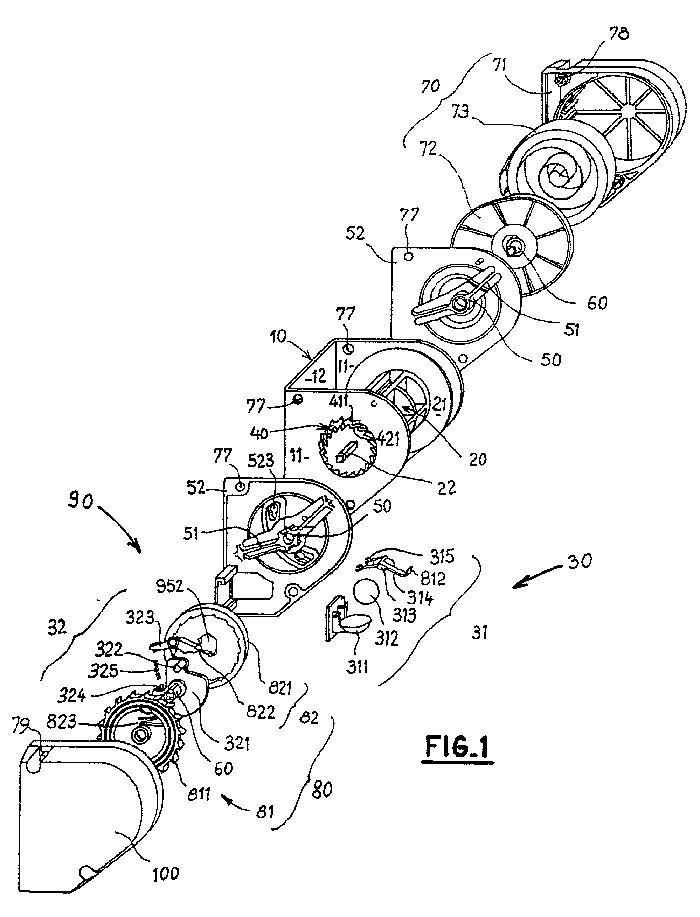

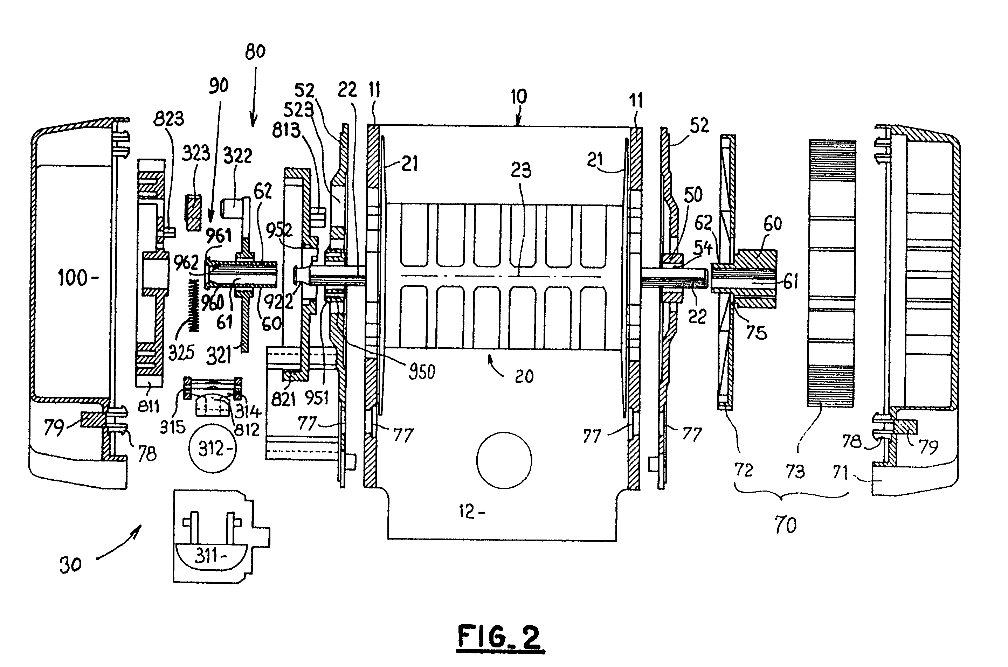

Comme on le voit en examinant, en particulier les Fig. 1 et 2 du dessin, un enrouleur pour ceinture de sécurité à tendeur à ressort de rappel et à blocage automatique sous la dépendance d'une centrale à inertie selon l'invention est constitué, entre autres, d'une embase 10, d'un moyeu 20, d'une centrale à inertie 30, de moyens de blocage 40, de paliers 50. A ces constituants sont aussi associés des manchons 60, un tendeur 70, des commandes 80 et un dispositif d'assemblage 90.

Comme on l'observe, l'embase 10 présente deux parois 11, pratiquement parallèles, réunies par un socle 12 de manière à avoir une configuration approximativement en U.

Dans cette embase 10 est logé un moyeu 20. Ce moyeu comprend deux joues 21 latérales, opposées et est terminé de part et d'autre, à chacune de ses extrémités, par un tourillon 22. Ce moyeu peut tourner suivant son axe 23 et se déplacer approximativement en translation perpendiculairement à celui-ci comme on l'exposera par la suite. C'est sur ce moyeu que s'enroule et se déroule une sangle non repésentée.

La centrale à inertie 30 comprend un détecteur 31 de la composante horizontale de l'accélération ou de la décélération du véhicule et un détecteur 32 de l'accélération tangentielle de la sangle.

Le détecteur 31, de tout type classique, est par exemple constitué d'une cuvette 311 dans laquelle repose une bille 312 libre au-dessus de laquelle est placée une cupule 313 portée par un levier 314 basculant suivant un axe 315.

Le détecteur 32 comprend, lui, un disque d'inertie 321 qui porte un pivot 322 sur lequel bascule un cliquet 323 soumis à l'action d'un ressort 325 qui repose sur un appui 324.

Cette centrale à inertie est d'un type classique et on en rappelera par la suite brièvement le fonctionnement.

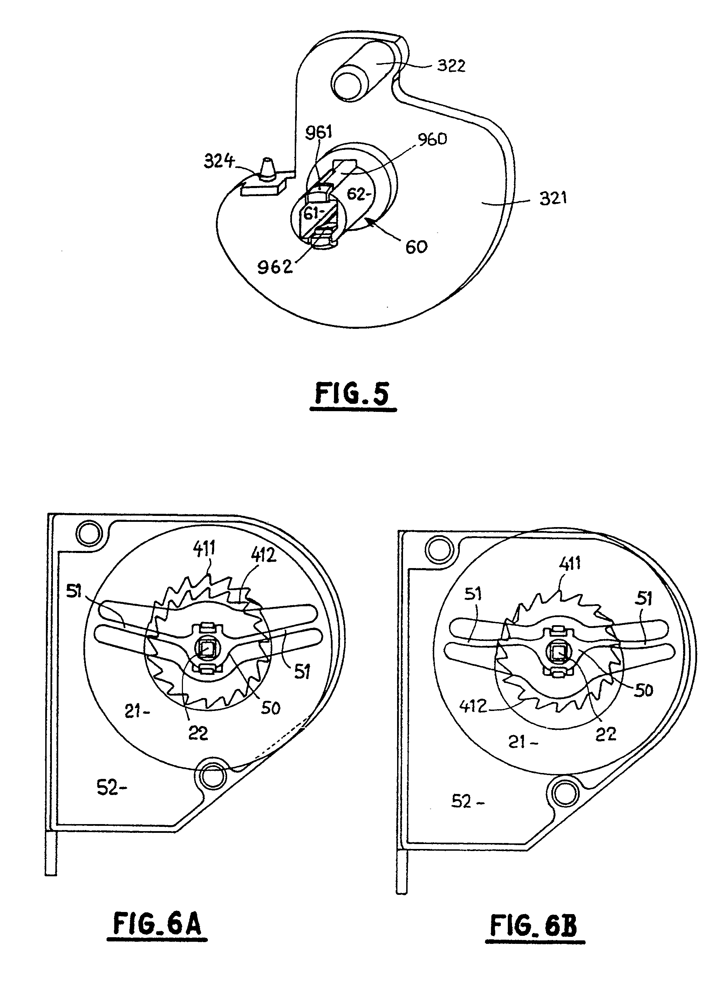

Entre l'embase 10 et le moyeu 20 sont placés des moyens de blocage 40 constitués d'une denture femelle 411 taillée dans les parois 11 de l'embase et d'une denture mâle 421 taillée à la périphérie des joues 21 du moyeu. Ceci apparaît clairement sur le dessin. Suivant que ces dentures complémentaires sont en prise (Fig. 6B) ou non (Fig. 6A), le moyeu est bloqué ou est libre, respectivement.

Les paliers 50 comprennent, chacun, au moins un élément 51 relié à l'une des parois 11 de l'embase 10, par exemple par l'intermédiaire d'un flasque 52 ; cet ou chaque élément 51 se présente à la manière d'une barrette qui soutient un logement 54 auquel il est relié par des zones 53.

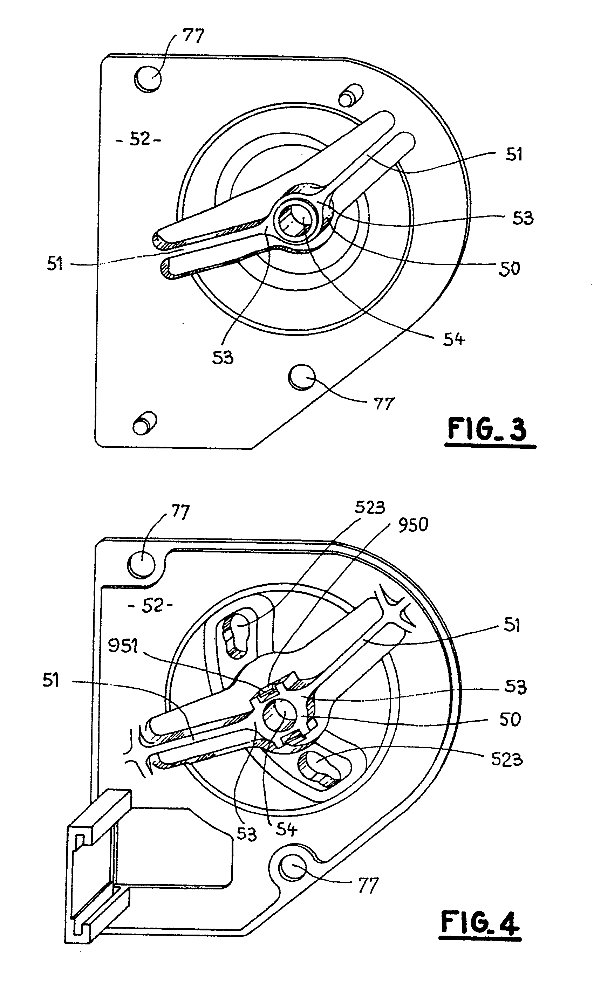

Comme on peut l'observer, l'un des flasques 52, celui du côté de la centrale à inertie, est percé de boutonnières 523 sur le rôle desquelles on reviendra par la suite. Tout ceci apparait clairement notamment sur les Fig. 1, 3 et 4.

Des manchons 60 sont de préférence engagés dans les logements 54. Ces manchons présentent une portée 62 extérieure cylindrique et un alésage 61 intérieur non circulaire, par exemple de section droite carrée.

Comme on le voit, les portées cylindriques 62 sont aptes à tourner dans les logements 54 alors que les alésages intérieurs 61 sont destinés à recevoir les tourillons 22, de section complémentaire, du moyeu 20, comme illustré.

L'enrouleur suivant l'invention comprend, encore, un tendeur 70. Ce tendeur peut constituer une entité préassemblée.

Ce tendeur se compose, essentiellement, d'un boîtier 71 fermé par un capot 72, dans lequel un ressort 73 spiral est lové sur un manchon 60. A l'état initial, avant montage du tendeur sur l'embase, le ressort, dont une extrémité est ancrée au boîtier et l'autre au manchon par exemple par une fente dessinée et non référencée, est prébandé et retenu dans cette situation car le manchon 60 est relié au capot 72 de préférence par des pattes 75 frangibles qui ne sont rompues qu'au moment du montage du tendeur 70 sur l'embase 10.

La rotation ou l'immobilisation du moyeu sont obtenues par des commandes 80 sous la dépendance de la centrale à inertie 30.

Ces commandes 80 comprennent, en particulier un sous-ensemble 81 sous la dépendance du détecteur 31 de déceleration du véhicule. Ce sous-ensemble 81 comprend, d'une part une roue dentée 811 munie, sur l'une de ses faces, de pieds 813 destinés à coopérer avec les boutonnières 523 du flasque 52, comme on l'expliquera par la suite et, d'autre part, une dent 812 portée par le levier 314. Comme cela est illustré et on le comprendra par la suite, cette roue dentée 811 peut suivre le moyeu 20 dans ses déplacements et aussi subir un décalage angulaire par rapport à ce dernier lorsque l'accélération tangentielle du moyeu dépasse une valeur limite prédéterminée.

Ces commandes 80 comprennent, aussi, un sous-ensemble 82 sous la dépendance du détecteur 32 d'accélération tangentielle de sangle. Ce sous-ensemble 82 comprend une roue à rochets 821 et un bec 822 portés par le cliquet 323. Le cliquet est soumis à l'action d'un taquet 823 de la roue dentée 811 qui exerce une action à l'encontre du ressort 325.

Le dispositif d'assemblage 90 à encliquetage comprend, sur le palier 50, comme illustré au moins un doigt élastique 950 terminé par une protubérance 951 destinée à s'engager dans une ouverture 952, non circulaire, de la roue à rochets 821 ; de la sorte cette roue à rochets ne peut pas tourner relativement. Ce dispositif comprend, comme illustré, aussi, au moins une lame élastique 960 portée par le manchon 60 solidaire du disque 321. Cette lame porte, d'une part, un épaulement 961 destiné à coopérer avec la roue dentée 811 et, d'autre part, un ergot 962 destiné à s'engager dans une entaille 922 ménagée à l'extrémité libre d'un des tourillons 22. Ceci est illustré notamment sur les Fig. 2 et 5.

Tout ce qui vient d'être décrit apparaît clairement à l'examen des différentes figures du dessin. En examinant en particulier les Fig. 1 et 2 on comprend l'architecture de l'enrouleur suivant l'invention et la manière dont on peut procéder à son assemblage et son montage, essentiellement par emboîtement et encliquetage.

On expliquera maintenant le fonctionnement de l'enrouleur suivant l'invention que l'on suppose avoir été préalablement assemblés.

On rappelera d'abord brièvement la manière dont opère la centrale à inertie 30 pour provoquer l'immobilisation initiale, en rotation, du moyeu 20 sur son axe 23.

Si le véhicule subit une décélération qui est supérieure à une valeur préfixée, la bille 312 qui repose sur son siège dans la cuvette 311 tend à s'échapper de celle-ci. Se faisant, elle prend appui sur la cupule 313 fixée au levier 314 qui bascule alors sur son axe 315; la dent 812 à l'extrémité du levier 314 vient alors s'engager dans l'une des dents de la périphérie de la roue dentée 811 : la roue dentée 811, retenue à sa périphérie se trouve alors immobilisée en rotation.

De même, si la composante tangentielle de l'accélération de la sangle dépasse une valeur donnée, le disque d'inertie 321 dont le manchon 60 est calé sur le tourillon 22 du moyeu prend un déphasage angulaire par rapport à la roue dentée 811 qui peut, elle, tourner sur la portée 62 extérieure cylindrique de ce manchon ; du fait de leur montage relatif, le cliquet 323 bascule à l'encontre du ressort 325 et son bec 822 vient s'engager contre les dents intérieures de la roue à rochets 821 calée en rotation. Ce basculement du cliquet 323 résulte de l'action du taquet 823 de la roue dentée 811 qui prend appui sur lui. Là encore, la roue dentée 811 est immobilisée en rotation et il en est donc de même du moyeu qui est entravé par cette dernière.

Le moyeu 20 ne pouvant plus ainsi tourner et étant sollicité tangentiellement par la sangle qui tire sur lui, celui-ci subit alors une translation perpendiculairement à son axe 23 et les dentures complémentaires 411 et 421 des moyens de blocage 40 viennent en prise. Tout ceci est classique.

En se reportant aux Fig. 6A et 6B on voit la manière dont les paliers 50 se comportent. Chacun des paliers est relié, directement ou indirectement, à l'une parois de l'embase par au moins un élément 51 déformable, relativement élastique, qui est solidaire d'un flasque 52 fixé sur la paroi. On voit que chacun des paliers est, de préférence, relié par deux éléments en forme de barrette, disposés pratiquement symétriquement par rapport à la direction du déplacement du moyeu perpendiculairement à son axe. Ces éléments sont ancrés au palier en des zones approximativement diamètralement opposées. On y observe que ces éléments qui se présentent à la manière d'une barrette sont, pour la position inactive du moyeu, inclinées pour former un V dont la pointe est dirigée à l'opposée de la position active. On voit aussi que l'immobilisation en rotation de la roue à rochets 821 résulte non seulement de son montage sur le palier à l'aide de géométries mâle et femelle complémentaires non-circulaires mais aussi de la présence des pieds 813 engagés, avec possiblité de débattement, dans les boutonnières 513 pour absorber une grande partie des efforts et contraintes au moment de l'immobilisation.

On voit donc que grâce à l'invention le moyeu est guidé avec précision tout en étant libre de tourner suivant son axe et de se déplacer perpendiculairement à ce dernier, et ceci sans pièce supplémentaire compliquée.

En observant aussi les vues des Fig. 1 et 2, ainsi que les suivantes, on voit que l'enrouleur suivant l'invention est muni d'un dispositif d'assemblage qui permet de réunir par simple encliquetage les principaux constituants de la centrale à inertie et des commandes. Cette centrale à inertie et les commandes sont protégées par un étui 100.

On ne s'étendra pas plus amplement sur la manière dont sont fabriqués les différents constituants. Suivant les efforts qu'ils ont à transmettre ils sont faits soit en métal soit en matière plastique. Les techniques de fabrication par usinage et/ou moulage des pièces métalliques ou en matières plastiques étant bien connues, on ne s'étendra pas davantage sur ceci.

L'examen des figures du dessin montre que le tendeur 70, d'une part, et la centrale à inertie 30 et les commandes 80, d'autre part, peuvent être, s'il y a lieu, assemblés avant d'être associés à l'embase. Le montage final et la retenue sont, par exemple assurés par des "pions" 78 élastiques à noyau 79 frangible de verrouillage, illustrés en particulier Fig. 1 et 2 qui s'engagent dans des trous 77 convenablement adaptés.

Du fait de son architecture, le dispositif d'assemblage 90 est simple et aisé à réunir par empilage ; la manière d'opérer apparaît clairement au spécialiste observant tout spécialement la Fig. 2.

## Revendications

1. Enrouleur pour ceinture de sécurité a tendeur à ressort de rappel et a blocage automatique sous la dépendance d'une centrale a inertie constitué, entre autres, d'une embase (10) qui présente deux parois (11) opposées pratiquement parallèles, d'un moyeu (20) pour recevoir une sangle qui est muni à proximité de chacune de ses extrémités d'une joue (21) et d'un tourillon (22) et qui est monté dans l'embase de manière à pouvoir y tourner suivant son axe (23) et à pouvoir s'y déplacer perpendiculairement a cet axe entre une position inactive où le moyeu peut tourner et une position active où le moyeu ne peut pas tourner, le passage de l'une a l'autre de ces deux positions étant sous la dépendance de la centrale à inertie (30), des moyens de blocage (40) complémentaires qui sont associés les uns aux parois (11) de l'embase et les autres aux joues (21) du moyeu et qui sont agencés pour coopérer lorsque le moyeu (20) est dans sa position active pour l'empêcher de tourner, des paliers (50) pour recevoir les tourillons (22) du moyeu (20) qui sont montés de manière a lui permettre de tourner suivant son axe (23) et de se déplacer perpendiculairement a ce dernier où ces paliers (50) sont reliés a l'une des parois (11) de l'embase (10) par au moins un élément (51) déformable, caractérisé en ce que chaque palier est relié à la paroi correspondante uniquement par ledit au moins un élément (51) et en ce que ce dernier (51) en plus de son aptitude à se déformer a aussi des caractéristiques élastiques pour lui permettre à lui seul de maintenir le palier correspondant dans la position inactive du tourillon et d'assurer le guidage lors du déplacement perpendiculaire à l'axe.

2. Enrouleur suivant la revendication 1, caractérisé en ce que cet élément (51) est solidaire d'un flasque (52) fixé sur la paroi (11).

3. Enrouleur suivant l'une quelconque des revendications 1 et 2, caractérisé en ce que chacun des paliers (50) est relié par deux éléments (51) disposés pratiquement symétriquement par rapport à la direction du déplacement du moyeu (20) perpendiculairement à son axe (23).

4. Enrouleur suivant la revendication 3, caractérisé en ce que chacun des éléments (51) est ancré à son palier (50) en des zones (53) approximativement diamétralement opposées.

5. Enrouleur suivant la revendication 3 ou 4, caractérisé en ce que chacun des éléments (51) se présente à la manière d'une barrette et en ce que pour la position inactive du moyeu (20) les barrettes (51) d'un même palier (50) sont inclinées pour former un V dont la pointe est dirigée à l'opposée de la position active.

6. Enrouleur suivant l'une quelconque des revendications 1 à 5, caractérisé en ce qu'entre l'un au moins des tourillons (22) du moyeu (20) et palier (50) est placé un manchon (60).

7. Enrouleur suivant la revendication 6, caractérisé en ce que le tourillon (22) a une section droite extérieure non-circulaire et le palier (50) a une section droite intérieure circulaire et en ce que le manchon (60) a des sections droites intérieure et extérieure complémentaires respectivement de celles du tourillon (22) et du palier (50) de manière que manchon (60) et tourillon (22) soient calés en rotation relativement l'un à l'autre et de manière que manchon (60) et palier (50) soient libres en rotation relativement l'un à l'autre.

8. Enrouleur suivant l'une quelconque des revendications 1 à 7, caractérisé en ce que palier (50) et élément (51) sont faits en matière plastique et de préférence obtenus par moulage, s'il y a lieu avec un flasque (52).

9. Enrouleur suivant l'une quelconque des revendications 1 à 8, caractérisé en ce qu'au moins une partie de la centrale à inertie (30), des commandes (80), des paliers (50) et des manchons (60) sont réunis par une dispositif d'assemblage (90) à encliquetage.

10. Enrouleur suivant la revendication 9, caractérisé en ce que le dispositif d'assemblage (90) comprend au moins un doigt élastique (950) qui est terminé par une protubérance (951) et qui est solidaire du palier (50) coopérant avec une ouverture non circulaire (952) ménagée dans un organe (821) des commandes (80) et comprend au moins une lame élastique (960) du manchon (60) qui est terminée, d'une part, par un épaulement (961) coopérant avec un autre organe (811) des commandes (80) et, d'autre part, par un ergot (962) coopérant avec une entaille (922) du tourillon (22) du moyeu (20).

11. Enrouleur suivant la revendication 10, caractérisé en ce que ces organes de commande sont une roue à rochets (821) et une roue dentée (811), respectivement.

12. Enrouleur suivant l'une quelconque des revendications 1 à 11, caractérisé en ce que le tendeur (70) comprend un boîtier (71) clos par un capot (72) où est logé un ressort (73) qui est lové sur un manchon (60) et dont une extrémité est ancrée au boîtier (71) et dont l'autre l'est au manchon (50) et en ce qu'après bandage du ressort et avant montage du tendeur sur l'embase, ce manchon (60) et ce capot (72) sont reliés par des pattes frangibles (75) qui sont rompues lors du montage.

13. Enrouleur suivant la revendication 12, caractérisé en ce que le tendeur (70) constitue une entité préassemblée.

14. Enrouleur suivant l'une quelconque des revendications 10 à 13 où cet organe (821) des commandes (80) est équipé de pieds (813) qui sont engagés avec une certaine latitude de débattement dans des boutonnières (523) correspondantes du flasque (52) d'un palier (50).

**Patentansprüche**

1. Aufwickelvorrichtung für Sicherheitsgurt mit einem Spanner mit Rückholfeder und automatischer Blockierung durch Einwirkung einer Trägheitseinrichtung, bestehend unter anderem aus einem Halter (10), der zwei praktisch parallele, einander entgegengesetzte Wände (11) besitzt, einer Nabe (20) zur Aufnahme eines Gurts, die in Nähe jedes ihrer Enden mit einer Wange (21) und einem Drehzapfen (22) versehen ist und in dem Halter so montiert ist, daß sie sich in ihm um ihre Achse (23) drehen und senkrecht zu dieser Achse zwischen einer inaktiven Stellen, in der sich die Nabe drehen kann, und einer aktiven Stellung bewegen kann, in der sich die Nabe nicht drehen kann, wobei der Übergang von der einen dieser beiden Stellungen in die andere durch die Trägheitseinrichtung (30) gesteuert ist, einander ergänzenden Blockiereinrichtungen (40), deren eine den Wänden (11) des Halters und deren andere den Wangen (21) der Nabe zugeordnet sind und die so ausgebildet sind, daß sie zusammenwirken, wenn die Nabe (20) in ihrer aktiven Stellung ist, um ihre Drehung zu verhindern, Lagern (50) zur Aufnahme der Drehzapfen (22) der Nabe (20), die so montiert sind, daß sie sich um ihre Achse (23) drehen und senkrecht zu dieser bewegen kann, wobei diese Lager (50) an einer der Wände (11) des Halters (10) durch mindestens ein verformbares Element (51) verbunden sind, dadurch gekennzeichnet, daß jedes Lager mit der entsprechenden Wand nur durch dieses mindestens eine Element (51) verbunden ist und daß dieses (51), abgesehen von seiner Fähigkeit sich zu verformen, auch elastische Eigenschaften besitzt, damit es allein das entsprechende Lager in der inaktiven Stellung des Drehzapfen halten und die Führung bei der zur Achse senkrechten Bewegung gewährleisten kann.

2. Aufwickelvorrichtung nach Anspruch 1, dadurch gekennzeichnet, daß das Element (51) mit einer an der Wand (11) befestigten Wange (52) fest verbunden ist.

3. Aufwickelvorrichtung nach einem der Ansprüche 1 und 2, dadurch gekennzeichnet, daß jedes der Lager (50) durch zwei Elemente (51) verbunden ist, die praktisch symmetrisch bezüglich der Richtung der zu ihrer Achse (23) senkrechten Bewegung der Nabe (20) ist.

4. Aufwickelvorrichtung nach Anspruch 3, dadurch gekennzeichnet, daß jedes der Elemente (51) an seinem Lager (50) in annähernd diametral entgegengesetzen Zonen (53) verankert ist.

5. Aufwickelvorrichtung nach Anspruch 3 oder 4, dadurch gekennzeichnet, daß jedes der Elemente (51) einen Steg bildet und daß die Stege (51) ein und desselben Lagers (50) in der inaktiven Stellung der Nabe (20) zu einem "V" geneigt sind, dessen Spitze entgegengesetzt zur aktiven Stellung gerichtet ist.

6. Aufwickelvorrichtung nach einem der Ansprüche 1 bis 5, dadurch gekennzeichnet, daß zwischen mindestens einem der Drehzapfen (22) der Nabe (20) und dem Lager (50) eine Muffe (60) angeordnet ist.

7. Aufwickelvorrichtung nach Anspruch 6, dadurch gekennzeichnet, daß der Drehzapfen (22) einen nicht kreisförmigen Außenquerschnitt und das Lager (50) einen kreisförmigen Innenquerschnitt besitzt und daß die Muffe (60) einen Innenquerschnitt und einen Außenquerschnitt besitzt, die zum Querschnitt des Drehzapfens (22) bzw. zum Querschnitt des Lagers (50) komplementär sind, so daß Muffe (60) und Drehzapfen (22) bezüglich Drehung zueinander blockiert sind und Muffe (60) und Lager (50) sich zueinander frei drehen können.

8. Aufwickelvorrichtung nach einem der Ansprüche 1 bis 7, dadurch gekennzeichnet, daß das Lager (50) und das Element (51) aus Kunststoff bestehen und vorzugsweise gegossen sind, und zwar ggf. mit einer Wange (52).

9. Aufwickelvorrichtung nach einem der Ansprüche 1 bis 8, dadurch gekennzeichnet, daß mindestens ein Teil der Trägheitseinrichtung (30), der Steuerorgane (80), der Lager (50) und der Muffen (60) durch eine Einrast-Montagevorrichtung (90) verbunden sind.

10. Aufwickelvorrichtung nach Anspruch 9, dadurch gekennzeichnet, daß die Montagevorrichtung (90) mindestens einen elastischen Daumen (950), der mit dem Lager (50) fest verbunden ist und an dessen Ende eine Erhebung (951) vorgesehen ist, die mit einer in einem Organ (821) der Steuerorgane (80) vorgesehenen, nicht kreisförmigen Öffnung (952) zusammenwirkt, und mindestens eine elastische Lamelle (960) der Muffe (60) besitzt, an deren Ende einerseits eine mit einem anderen Organ (811) der Steuerorgane (80) zusammenwirkende Schulter (961) und andererseits eine Nase (962) vorgesehen ist, die mit einer Aussparung (922) des Drehzapfens (22) der Nabe (20) zusammenwirkt.

11. Aufwickelvorrichtung nach Anspruch 10, dadurch gekennzeichnet, daß diese Steuerorgane ein Sperrad (821) bzw. ein Zahnrad (811) sind.

12. Aufwickelvorrichtung nach einem der Ansprüche 1 bis 11, dadurch gekennzeichnet, daß der Spanner (70) ein durch eine Kappe (72) abgeschlossenes Gehäuse (71) besitzt, in dem eine Feder (73) sitzt, die auf eine Muffe (60) aufgewickelt ist und deren eines Ende am Gehäuse (71) und deren anderes Ende an der Muffe (50) verankert ist, und daß die Muffe (60) und die Kappe (72) nach Spannen der Feder und vor Montage des Spanners an dem Halter durch abbrechbare Lappen (75) verbunden werden, die bei der Montage abgebrochen werden.

13. Aufwickelvorrichtung nach Anspruch 12, dadurch gekennzeichnet, daß der Spanner (70) eine vormontierte Einheit bildet.

14. Aufwickelvorrichtung nach einem der Ansprüche 10 bis 13, bei der das Organ (821) der Steuerorgane (80) mit Füßen (813) versehen ist, die mit einer gewissen Ausschlagfreiheit in entsprechende Langlöcher (523) der Wange (52) eines Lagers eingesteckt sind.

## Claims

1. A winder for a safety belt which has a tightener using a return spring and is automatically locked under the control of an inertia unit, the winder comprising inter alia : a base (10) having two substantially parallel opposite walls (11) ; a hub (20) for receiving a strap having adjacent each of its ends a cheek (21) and a journal (22) and so mounted in the base as to be rotatable around its axis (23) and movable therein perpendicularly to said axis between an inoperative position, in which the hub is rotatable and an operative position in which the hub cannot rotate, the passage from one to the other of said two positions being under the control of the inertia unit (30) ; complementary locking means (40) some of which are associated with the walls (11), and the others being associated with the cheeks (21) of the hub and which are adapted to cooperate when the hub (20) is in its operative position so as to prevent it from rotating ; and bearings (50) which receive the journals (22) of the hub (20) and are so mounted as to enable the hub to rotate around its axis (23) and to move perpendicularly thereto, said bearings (50) being connected to one (11) of the walls of the base (10) via at least one deformable element (51), characterized in that each bearing is connected to the corresponding wall solely via said at least single element (51), and in addition to its ability to become deformed, said element (51) also has resilient characteristics which enable said element on its own to retain the corresponding bearing in the inoperative position of the journal and to ensure guiding during displacement perpendicularly to the axis.

2. A winder according to claim 1, characterized in that said element (51) is connected to a side wall (52) attached to the wall (11) of the base.

3. A winder according to claims 1 or 2, characterized in that each of the bearings (50) is connected via two elements (51) which are disposed substantially symmetrically in relation to the direction of displacement of the hub (20) perpendicularly to its axis (23).

4. A winder according to claim 3, characterized in that each of the elements (51) is anchored to its bearing (50) in substantially diametrically opposite zones (53).

5. A winder according to claims 3 or 4, characterized in that each of the elements (51) takes the form of a small bar, and in the inoperative position of the hub (20) the small bars (51) of a given bearing (50) are so inclined as to form a V whose point is directed away from said operative position.

6. A winder according to any of claims 1 to 5, characterized in that a sleeve (60) is disposed between at least one of the journals (22) of the hub (20) and the associated bearing (50).

7. A winder according to claim 6, characterized in that the journal (22) has an outer non-circular cross-section and the bearing (50) has an inner circular cross-section, the sleeve (60) having inner and outer cross-sections which are complementary with those of the journal (22) and the bearing (50) respectively, so that the sleeve (60) and the journal (22) are keyed to rotate together and the sleeve (60) and the bearing (50) are free to rotate in relation to one another.

8. A winder according to any of claims 1 to 7, characterized in that the bearing (50) and the element (51) are made from a plastics material and are preferably produced by moulding, if necessary with a side wall (52).

9. A winder according to any of claims 1 to 8, characterized in that at least a portion of the inertia unit (30), the controls (80), the bearings (50) and the sleeves (60) are clipped together by an assembling device (90).

10. A winder according to claim 9, characterized in that the assembling device (90) comprises at least one resilient finger (950) which terminates in a protuberance (951) and is connected to the bearing (50) cooperating with a non-circular opening (952) provided in a member (821) of the controls (80) and comprises at least one resilient strip (960) of the sleeve (60) which terminates on the one hand in a shoulder (961) cooperating with another member (811) of the controls (80) and on the other hand in a lug (962) which cooperates with a recess (922) in the journal (22) of the hub (20).

11. A winder according to claim 10, characterized in that said control members are a ratchet wheel (821) and a toothed wheel (811) respectively.

12. A winder according to any of claims 1 to 11, characterized in that the tightener (70) comprises a casing (71) closed by a cap (72) and containing a spring (73) which is wound around a sleeve (60) and one end of which is anchored to the casing (71), its other end being anchored to the sleeve (50), and after the spring has been stressed and before the tightener has been mounted on the base, the sleeve (60) and the cap (72) are interconnected via breakable lugs (75) which are broken when the tightener is mounted on the base.

13. A winder according to claim 12, characterized in that the tightener (70) forms a preassemble unit.

14. A winder according to any of claims 10 to 13, wherein said member (821) of the controls (80) has lugs (813) which engage with a certain freedom of movement in corresponding slots (523) in the side wall (52) of a bearing (50).

**FIG.1**

EP 0 296 913 B1

**FIG. 2**

**FIG. 3**

**FIG. 4**

**FIG.5**

**FIG.6A**

**FIG.6B**